# EUROPEAN PATENT APPLICATION

(11) **EP 4 279 341 A1**
(43) Date of publication of application: **22.11.2023**
(21) Application number: 22738853.5
(22) Date of filing: 11.01.2022
(51) Int. Cl.: B60S 1/18, B60S 1/04, B60S 1/24, F16C 11/04

(54) **CONNECTING ROD FOR A WINDSCREEN WIPER ACTUATING LINKAGE**

(30) Priority: 12.01.2021 BR 102021000503
(71) Applicant: VALEO SYSTEMES D'ESSUYAGE, 78321 Le Mesnil Saint Denis (FR)
(72) Inventor: GOMEZ, José Carlos, 13053-050 CAMPINAS (BR)
(74) Representative: Valeo Visibility
(86) International application number: PCT/BR2022/050009
(87) International publication number: WO 2022/150898

(57) **Abstract**

The present invention relates to a link rod (105) of a windscreen wiper drive linkage (101), comprising : a first attachment portion (205) provided at a first longitudinal end (209a, 120a, 120b) of the link rod (105); a second attachment portion (210) provided at a second longitudinal end (209b, 130a, 130b) opposite to the first longitudinal end (209a) of the link rod (105); and an elongated portion (215). The elongated portion (215) is integrally formed between the first attachment portion (205) and the second attachment portion (210). The elongated portion (215) comprises two substantially parallel longitudinal sidewalls (220a, 220b) facing each other. The two substantially parallel longitudinal sidewalls (220a, 220b) are joined together by a longitudinal intermediate wall (225b) forming a longitudinal cavity (225a) between the longitudinal sidewalls (220a, 220b).

## Description

### TECHNICAL FIELD

The present invention relates to a windscreen wiper drive linkage. More particularly, the present invention relates to a connecting rod or a link rod for a drive linkage of a motor windscreen wiper system.

### STATE OF THE ART

An automobile is conventionally equipped with a windscreen wiper system to ensure that the windscreen is washed and that the driver's view of his environment is not disturbed. This wiper system usually consists of a wiper arm, which moves back and forth at an angle, and elongated wiper blades, which carry wiper strips made of elastic material. These strips rub against the windscreen and evacuate water out of the driver's field of vision. The wiper arm of each wiper blade is connected by its end opposite to the wiper blade to a windscreen wiper drive linkage for its rotational drive. A motor is coupled to the windscreen wiper drive linkage comprising a pivot assembly, which in turn drives the wiper arms and blades.

Conventionally, the motor is disposed in a suitable location usually in the engine compartment near the windscreen. The pivot assemblies are likewise disposed adjacent the lower edge of the windscreen and transmit motion of the motor to the wiper arms. The desired wipe angle and the cleaning area on the windscreen are obtained by properly selecting the length and configuration of the linkage and of the wiper arms attached to the shaft of the pivot assembly. These connecting links are therefore an important component of the windshield wiper systems.

Classically, a windscreen wiper drive linkage comprises one or more link rods, also called connecting rod, whose longitudinal end is articulated on a driving crank that is rotationally linked to a pivot shaft, and more specifically to its wiper arm. The connecting rod is usually an elongated one-piece structure, and is connected to different members at the two ends to transmit the force or motion of one member to the other member.

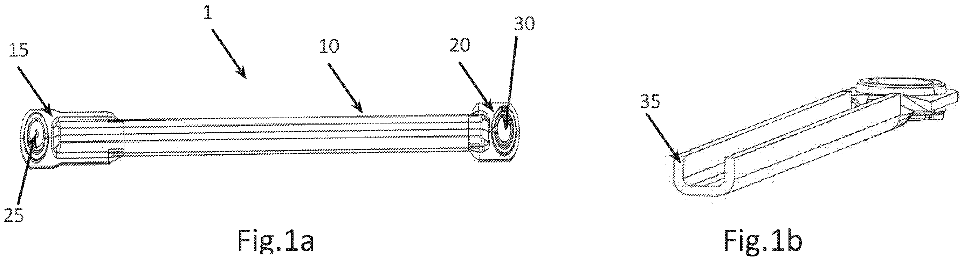

Conventionally, the link rods are made of steel sheets stamped members or steel sheets tubes. Conventional link rod 1 is shown in Fig.1a, and cross sectional view of the conventional link rod is shown in Fig.1b. As can be seen from the Fig.1a, the conventional link rod comprising a cylindrical section 10 and a pair of flat ends 15, 20 formed at opposite ends of the cylindrical section, and a pair of coupling sections, 25, 30 formed on the flat ends. Further, as can be seen from the Fig.1b, the conventional link rod has a U-shaped cross section 35. The conventional link rods are heavy, and tend to degrade the performance and longevity of the wiper system. It would be desirable to reduce the weight of the link rod as much as possible, since this would lower the inertia, reduce the load placed on the actuator motor and minimize noise and wear. It would be also desirable to reduce the weight of the link rod as much as possible in order to reduce the mass of vehicle components, and as a result to contribute to reduce CO₂ emissions.

While reduction of weight is desirable for the reasons set forth above, it is also desirable to improve strength and buckling resistance of the link rod such that the link rod operates effectively at higher load. For instance, the wiper system must function not only on rainy days, but also on snowy and icy days. On snowy and icy days, considerably greater strength is required since the wipers are used to move heavy amounts of snow or to break the wiper blades free of an icing condition.

### SUMMARY OF THE INVENTION

An object of the invention is to alleviate the problems raised by the prior arts. To be more precise, an object of the invention is to provide a link rod, which is lesser in weight compared to the conventional link rods, while having better buckling resistance compared to the buckling resistance of the conventional link rods. The term buckling resistance is defined as the change in shape (deformation) of a structural component under load.

To achieve these objectives, the present invention provides a link rod, in particular of a windscreen wiper drive linkage, comprising a first attachment portion provided at a first longitudinal end of the link rod; a second attachment portion provided at a second longitudinal end opposite to the first longitudinal end of the link rod; and an elongated portion. The elongated portion is integrally formed between the first attachment portion and the second attachment portion, wherein the elongated portion comprises two substantially parallel longitudinal sidewalls facing each other. Further, the two substantially parallel longitudinal sidewalls are joined together by a longitudinal intermediate wall forming a longitudinal cavity between the longitudinal sidewalls.

The link rod having the above characteristics realizes reduction in structural weight and thickness of the link rod. For example, the link rod of the present invention may have about 30 percent less structural weight compared to conventional link rods and thickness may be reduced to about 1mm from 2mm. The reduction in the structural weight results in lowering the inertia, which reduces the load placed on the wiper motor, and hence noise and wear can be minimized. It also results to reduce CO2 emissions in a significant way. Besides weight and thickness reduction, the structure of the link rod of the present invention increases its buckling resistance. Because of the increased buckling resistance, the link rod of the present invention ensures optimum transmission of forces from the first longitudinal end to the second longitudinal end when the link rod is subjected to operation.

According to one characteristic of the present invention, the longitudinal intermediate wall has a symmetric shape along a longitudinal axis of the link rod. The link rod has a substantially rectilinear elongated shape and therefore the longitudinal intermediate wall extends along the longitudinal axis.

Further, the longitudinal intermediate wall has a cross section in the form of substantially U-shape. The longitudinal intermediate wall improves the stiffness of the link rod and buckling resistance of the link rod such that the link rod operates effectively at higher loads. With the increased stiffness and the buckling resistance, the link rod of the present invention can resist the forces acting on it and do not damage or block the movement of a wiper linkage system at all the loads. The link rod having this cross sectional shape realizes reduction in weight and thickness of the link rod, while ensuring sufficient strength to operate effectively the link rod at all loads and at all weather conditions. Thus, the link rod of the present invention ensures continues operation of the wiper linkage system regardless of external forces acting on the link rod. Hence, the wiper linkage system with the link rod of the present invention is more reliable at all weather conditions because of its improved strength and the buckling strength compared to conventional link rods.

According to one characteristic of the present invention, the elongated portion of the link rod has a substantially M or inverted M-shaped cross section. In an aspect, the profile of the cross section of the link rod is of substantially M-shaped when the link rod is in mounted position on the windscreen wiper drive linkage, and the profile of the cross section of the link rod is of substantially W-shaped when the link rod is viewed in in reverse mounted position.

In other words, that is to say that the longitudinal cavity comprises an opening arranged to face in a direction opposite a wiper motor fixed on the windscreen wiper drive linkage.

As well known the wiper linkage system comprises a driving crank pivotally connected with the link rod. The reciprocating movement of a wiper blade is provided by reciprocating linear movement of the link rod with the driving crank. During the reciprocating linear movement, an angle between the driving crank and the link rod increases, causing a movement of the wiper arm in one direction and decreases, causing a movement of the wiper arm in the opposite direction. When the vehicle wiper device operates between the mounted position and the deflected position, the link rod is arranged with respect to the driving crank in such a way that that forces acting on the driving crank and the link rod do not damage or block the wiper linkage system.

According to one characteristic of the present invention, each of the first attachment portion and the second attachment portion comprises a connecting base having a coupling member formed therein for securing a pivot linkage of the windscreen wiper drive linkage.

Further, the coupling member comprises a socket structure for receiving a ball.

According to one characteristic of the present invention, the sidewalls of the elongated portion extend around the contour of the connecting bases of the first attachment portion and the second attachment portion. Unlike conventional link rods, the sidewalls of the elongated portion are extended around the contour of the connecting bases in the link rod of the present invention. As the thickness of the link rod of the present invention is less than the thickness of conventional link rods, the walls around the contour of the connecting portion mechanically strengthen the link rod. Indeed, the walls around the contour of the connecting portion prevent bending at fixation area of the connecting bases at higher loads and at different weather conditions. Further, the contour of the sidewalls around the connecting bases ensures preventing pop-off of ball stud from the linkage system.

According to one characteristic of the present invention, the connecting base extends from the coupling member of the first attachment portion and the second attachment portion to the longitudinal intermediate wall of the elongated portion such that the width of the connecting base decreases from the coupling member to the elongated portion. This decrease in the width of the connecting base results in saving the material used to manufacture link rods of the present invention compared to the conventional link rods. Further, this particular design also prevents breakage of socket and breakage of link rod at different loads and weather conditions.

According to one characteristic of the present invention, each longitudinal sidewall of the elongated portion has a height greater than a height of the longitudinal intermediate wall.

Particularly, each sidewall of the first attachment portion and the second attachment portion has a height greater than a height of the connecting base.

More particularly, each longitudinal sidewall of the elongated portion has a height similar than the height of each sidewall of the first attachment portion and the second attachment portion.

According to one characteristic of the present invention, the longitudinal sidewalls are joined to the longitudinal intermediate wall in a curved manner.

According to one characteristic of the present invention, the first attachment portion, the second attachment portion, and the elongated portion are formed as a single component. As the link rod is made of a single component, the link rod can withstand the forces to which it is subjected during operation, unlike the conventional link rods, which are made up of several assembled parts, are not dimensioned to withstand the forces to which they are subjected in operation.

According to one characteristic of the present invention, the link rod is made of a non-metallic, synthetic moldable composition, such as a synthetic polyamide material reinforced with glass fibers. Such a material is, for example Nylon 12.

According to one characteristic of the present invention, the link rod is resistant to a compression force of about 3000 N.

The present invention also relates to a windscreen wiper drive linkage, which comprises the link rod as previously disclosed, and further comprises a first longitudinal end of the link rod is coupled to a first pivot shaft for driving a first wiper arm by means of a first driving crank fixedly coupled at one of its end with the first wiper pivot shaft; and a second longitudinal end of the link rod is coupled to a second pivot shaft for driving a second wiper arm by means of a second driving crank fixedly coupled at one of its end with the second wiper pivot shaft.

Thus, the link rod of the present invention has lesser weight and thickness compared to conventional link rods, which results to reduce CO₂ emissions and ensures continues operation of the wiper linkage system regardless of external forces acting on the link rod in a reliable way.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1a shows a perspective view of a link rod of a windscreen wiper drive linkage for driving a wiper of a motor vehicle, according to prior arts.
Fig.1b shows a cross sectional view of the link rod shown in the Fig.1a.
Fig. 2 shows a perspective view of a wiper module having a windscreen wiper drive linkage with the link rods, according to an embodiment of the present invention.
Fig.3 shows a perspective top view of a link rod of a windscreen wiper drive linkage shown in the Fig. 2, according to an embodiment of the present invention.
Fig.4 shows a perspective bottom view of a link rod of windscreen wiper drive linkage shown in the Fig.2, according to an embodiment of the present invention.
Fig.5a and Fig.5b shows cross sectional views of a link rod, according to an embodiment of the present invention.

### DETAILED DESCRIPTION OF THE INVENTION

Hereinafter, embodiments of the present invention will be described with reference to the accompanying drawings.

The illustrative embodiments of the present invention are not meant to be limiting. It may be readily understood that certain aspects of the disclosed embodiments of the present invention can be arranged and combined in wide variety of different configurations, all of which are contemplated herein.

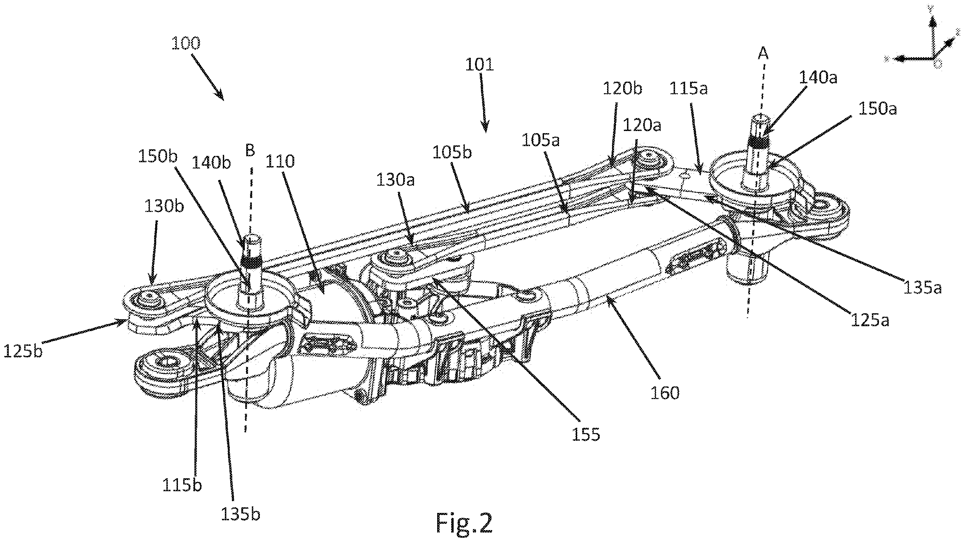

In the following description, the longitudinal, vertical or transverse denominations refer to the orientation a link rod of a windscreen wiper drive linkage. The longitudinal direction corresponds to a direction of longitudinal extension of the link rod, this longitudinal direction being parallel to an axis Ox of an orthonormal reference, for example represented in Figure 2. The transverse direction corresponds to a direction parallel to an Oy axis of this orthonormal frame, the axis Oy being perpendicular to the axis Ox. A vertical direction corresponds to a direction parallel to an axis Oz of the orthonormal coordinate system, the axis Oz being perpendicular to the axis Ox and the axis Oy.

A windscreen wiper system is generally used on motor vehicles to clean the windscreen of the vehicle. The windscreen wiper system comprises a wiper module 100 shown in details in Fig.2. The wiper module 100 comprises a drive unit and windscreen wiper drive linkage 101, which transfers drive from a wiper motor 110 of the drive unit to a pair of wiper arms (not shown in Figures), providing reciprocating movement of the wiper arms. Wiper blades (not shown in Figures) are attached to the wiper arms for wiping a windscreen of the vehicle. The wiper blades are placed in abutment with the windscreen, such that the wiper blades are capable of wiping the windscreen of a vehicle. The windscreen wiper drive linkage 101 is provided for moving the wiper arms between an in wipe position, an out wipe position and a parked position.

On Fig.2 is depicted a windscreen wiper drive linkage 101, according to an embodiment of the present invention. The windscreen wiper drive linkage 101 comprises a first link rod 105a transferring a drive from the wiper motor 110 to a first driving crank 115a and via a second link rod 105b to a second driving crank 115b. One longitudinal end 120a of the first link rod 105a is linked to a second end 125a of the first driving crank 115a. Further, one longitudinal end 120b of the second link rod 105b is linked to the second end 125a of the first driving crank 115a. The other longitudinal end 130b of the second link rod 105b is linked to a second end 135b of the second driving crank 115b.

A first wiper arm (not shown in Figures) is fixed to a first pivot shaft 140a and the second wiper arm (not shown in Figures) is fixed to a second pivot shaft 140b. Then, a drive is transferred via the pivot shafts 140a, 140b into a reciprocating movement of the first wiper arm and the second wiper arm. The first wiper arm rotates about the rotational axis A of the first pivot shaft 140a and the second wiper arm rotates about the rotational axis B of the second pivot shaft 140b.

The windscreen wiper drive linkage 101 presented in Fig. 2 further comprises a first pivot shaft housing 150a and a second pivot shaft housing 150b. The first pivot shaft housing 150a and the second pivot shaft housing 150b support a first pivot shaft 140a and a second pivot shaft 140b, respectively. The first pivot shaft 140a has a first rotational axis A around which the first pivot shaft 140a rotates in the first pivot shaft housing 150a. The second pivot shaft 140b has the second rotational axis B around which the second pivot shaft 140b rotates in the second pivot shaft housing 150b.

The first pivot shaft 140a is fixed to the first end 135a of the first driving crank 115a and the second pivot shaft 140b is fixed to the first end 135b of the second driving crank 115b. The wiper motor 110 is coupled with the windscreen wiper drive linkage 101 via a coupling element 155. The coupling element 155 is linked to the other longitudinal end 130a of the first link rod 105a. The wiper module 100 further comprises a frame tube 160 for supporting the first pivot shaft housing 150a, the second pivot shaft housing 150b and the wiper motor 110.

The first link rod 105a and the second link rod 105b driven by the wiper motor 110 perform a reciprocating linear movement. During the reciprocating linear movement, an angle between the second driving crank 115b and the second link rod 105b decreases, causing movement of the wiper arm in one direction and increases, causing movement of the wiper arm in the opposite direction. The reciprocating linear movement of the second link rod 105b is transferred into a reciprocating movement of the second driving crank 115b. The movement of the second link rod 105b towards the second driving crank 115b causes a rotation of the second driving crank 115b about the rotational axis B of the second pivot shaft 140b. Accordingly, the reciprocating linear movement of the first link rod 105a is transferred into a reciprocating movement of the first driving crank 115a. The first driving crank 115a rotates about the rotational axis A of the first pivot shaft 140a.

Hereinafter, for the purpose of brevity, the first link rod 105a and the second link rod 105b are referred as a link rod 105 with as the structure of the first link rod 105a and the second link rod 105b is same.

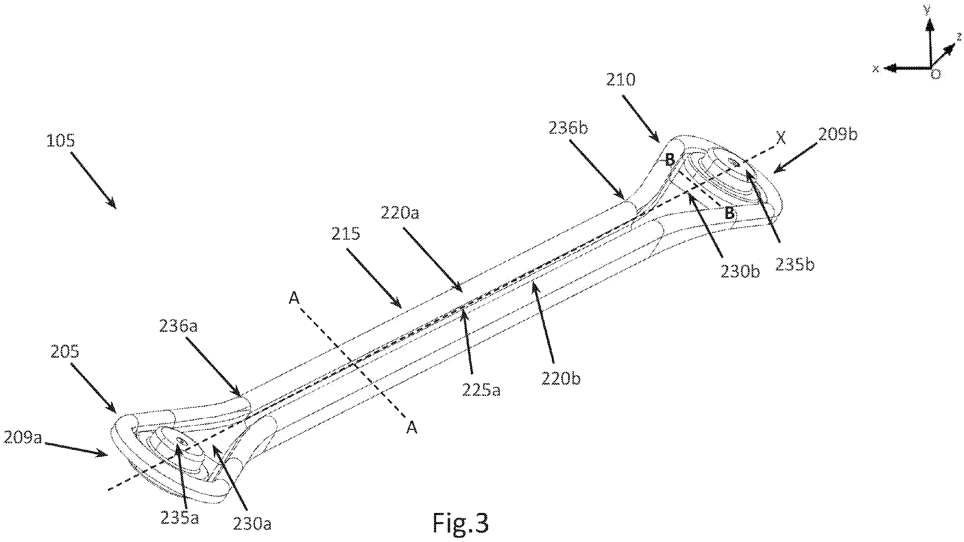

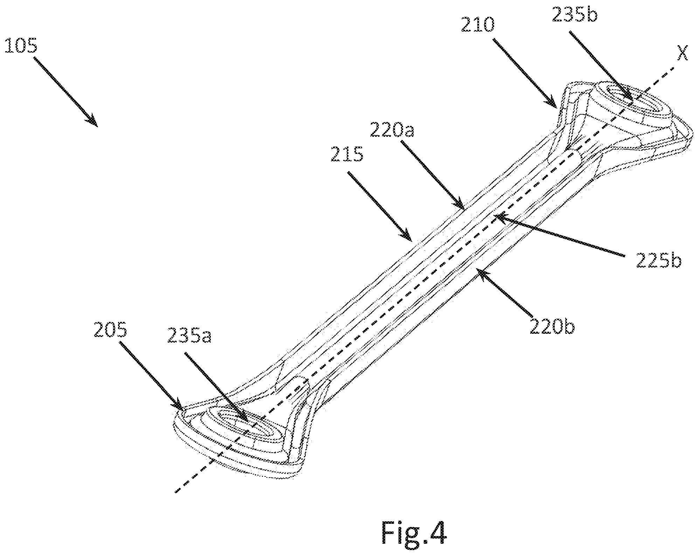

Fig. 3 shows a perspective top view of a link rod of a windscreen wiper drive linkage shown in the Fig.2, according to an embodiment of the present invention. Fig.4 shows a perspective bottom view of a link rod of a windscreen wiper drive linkage shown in the Fig. 2, according to an embodiment of the present invention.

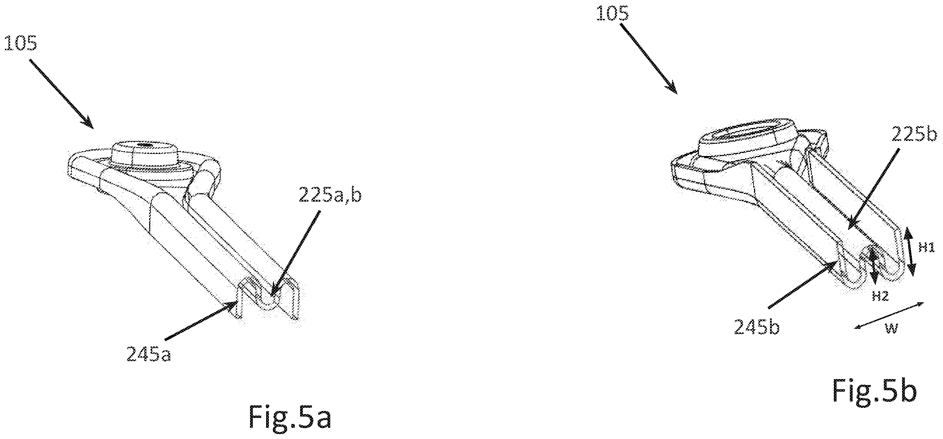

As can be seen in the Fig.3 and the Fig. 4, the link rod 105 is a longitudinal element and comprises a first attachment portion 205, a second attachment portion 210 and an elongated portion 215 integrally formed between the first attachment portion 205 and the second attachment portion 210. The elongated portion 215 of the link rod 105 is symmetric about Ox axis, the axis Oy and the axis Oz. The first attachment portion 205 is provided at a first longitudinal end 209a of the link rod 105, and a second attachment portion 210 provided at a second longitudinal end 209b opposite to the first longitudinal end 209a of the link rod 105. The elongated portion 215 comprises two substantially parallel longitudinal sidewalls 220a, 220b facing each other. The two substantially parallel longitudinal sidewalls 220a, 220b are joined together by an upper longitudinal intermediate wall 225b (shown in Fig.4) forming a longitudinal cavity 225a between the longitudinal sidewalls 220a, 220b. In an aspect, the longitudinal sidewalls 220a, 220b are joined to the longitudinal intermediate wall 225b in a curved manner, as shown in the Fig.5a and Fig.5b.

The longitudinal intermediate wall 225b has a cross section in the form of substantially U-shape. Further, the elongated portion 215 of the link rod 105 has a substantially M or W-shaped cross section, as shown in the Fig.5a and the Fig.5b. In an aspect, the profile of the cross section of the link rod 105 is of substantially M-shaped when the link rod is in normal mounted position as shown in the Fig.2 and Fig.5a, and the profile of the cross section of the link rod 105 is of substantially W-shaped when the link rod 105 is in placed in reverse mounted position, as shown in the Fig.5b. In other words, the opening of the longitudinal cavity 225a of the longitudinal intermediate wall 225b faces in a direction opposite the wiper motor 110 fixed on the windscreen wiper drive linkage 101.

Further, each longitudinal sidewall 220a, 220b of the elongated portion 215 has a height H1 greater than a height H2 of the longitudinal cavity 225a forming the longitudinal intermediate wall 225b, as shown in the Fig.5b.

In an aspect, the sidewalls 220a, 220b of the elongated portion 215 have a thickness of less than 2mm and more particularly of about 1mm.

Each of the first attachment portion 205 and the second attachment portion 210 comprises a connecting base 230a, 230b having a coupling member 235a, 235b formed therein for securing the driving crank 115a, 115b of the windscreen wiper drive linkage 101. Unlike the conventional link rods, the sidewalls 220a, 220b of the elongated portion 215 of the link rod 105 of the present invention are extended from the elongated portion 215 at both the longitudinal ends 209a, 209b to extend around the contour of the connecting bases 230a, 230b of the first attachment portion 205 and the second attachment portion 210.

As can be seen from the Fig.3 and the Fig.4, the width of the connecting bases 230a, 230b decreases from the coupling member to the elongated portion 215. The width is defined as the distance between two traversal ends B-B of the connecting base 230a, 230b. As previously mentioned, the width of the connecting bases 230a, 230b decreases from the coupling member 235a, 235b to the elongated portion such that distance between the sidewalls 220a, 220b at ends 236a, 236b of elongated portion 215 is equal to the width of the connecting bases 230a, 230b at the ends 236a, 236b of elongated portion 215. Further, as can be seen from the Fig.3 and the Fig.4, the sidewalls 220a, 220b are bent outwardly at the ends 236a, 236b of the elongated portion 215 to extend around the contour of the connecting bases 230a, and 230b. The sidewalls that are extended around the contour of the connecting bases 230a, 230b prevent bending at fixation area of the connecting bases 230a, 230b at higher loads and at different weather conditions.

Further, the contour of the sidewalls 220a, 220b around the connecting bases 230a, 230b ensure preventing pop off ball stud from the windscreen wiper drive linkage 101. Although, the windscreen wiper drive linkage 101 of the present invention is discussed with respect to ball-socket mechanism, it is understood to a person skilled in the art that any other mechanism can be implemented to achieve the desired functionality. Further, as can be seen from the Fig.4, the intermediate wall 225b that is formed between the sidewalls 220, 220b gradually softens until the area where the ball socket is assembled.

In an aspect, the first attachment portion 205, the second attachment portion 210, and the elongated portion 215 are formed as a single component. As the link rod 105 of the present invention is made of a single component, the link rod 105 can withstand the forces to which it is subjected during operation, unlike some of conventional link rods, which are made up of several assembled parts, are not dimensioned to withstand the forces to which they are subjected in operation. The link rod 105 of the present invention is designed in such a way that it is configured to resistant to a compression force of about 3000 N.

Typically, the link rod 105 of the present invention is made of a non-metallic, synthetic moldable composition, such as a synthetic polyamide material reinforced with glass fibers. Such a material is, for example Nylon 12.

The link rod 105 having the above characteristics realizes reduction in structural weight and thickness of the link rod. For example, the link rod 105 of the present invention may have about 30 percent less structural weight compared to conventional link rods and thickness may be reduced to about 1mm from 2mm. The reduction in the structural weight would results in lowering the inertia, which would reduce the load placed on the wiper motor, and minimize noise and wear. Besides weight and thickness reduction, the structure of the link rod of the present invention exhibits improved buckling resistance, for example, about 48 percentage compared to buckling resistance of conventional link rods. Because of the increased buckling resistance, the link rod of the present invention ensures optimum transmission of forces from the first longitudinal end to the second longitudinal end when the link rod is subjected to operation. Further, as the link rod of the present invention contributes to reduce the mass of vehicle components, it would results in reducing CO₂ emissions.

Further, the thickness, height (H1), and the width (B) of the link rod 105 can be varied to according to necessity to obtain better buckling resistance related to length (d) of the link rod 105. The length of the link rod 105 is defined as the distance between ball socket centers at both the ends of the link rod 105.

The invention being thus described, it will be obvious that the same may be varied in many ways. Such variations are not to be regarded as a departure from the spirit and scope of the invention, and all such modifications as would be obvious to one skilled in the art are intended to be included in the scope of the following claims.

## Claims

1. A link rod (105), in particular of a windscreen wiper drive linkage (101), comprising
a first attachment portion (205) provided at a first longitudinal end (209a, 120a, 120b) of the link rod (105);
a second attachment portion (210) provided at a second longitudinal end (209b, 130a, 130b) opposite to the first longitudinal end (209a, 120a, 120b) of the link rod (105);
an elongated portion (215) integrally formed between the first attachment portion (205) and the second attachment portion (210), wherein the elongated portion (215) comprises two substantially parallel longitudinal sidewalls (220a, 220b) facing each other, **characterized in that** the two substantially parallel longitudinal sidewalls (220a, 220b) are joined together by a longitudinal intermediate wall (225b) forming a longitudinal cavity (225a) between the longitudinal sidewalls (220a, 220b).

2. The link rod (105) as claimed in claim 1, wherein the longitudinal intermediate wall (225b) has a symmetric shape along a longitudinal axis (Ox) of the link rod (105).

3. The link rod (105) as claimed in any one of the previous claims, wherein the longitudinal intermediate wall (225b) has a cross section in the form of substantially U-shape.

4. The link rod (105) as claimed in any one of previous claims, wherein the elongated portion (215) of the link rod (105) has a substantially M or W-shaped cross section.

5. The link rod (105) as claimed in any one of preceding claims, wherein the longitudinal cavity (225a) comprise an opening arranged to face in a direction opposite a wiper motor (110) fixed on the windscreen wiper drive linkage (101).

6. The link rod (105) as claimed in any one of the previous claims, wherein each of the first attachment portion (205) and the second attachment portion (210) comprises a connecting base (230a, 230b) having a coupling member (235a, 235b) formed therein for securing a pivot linkage of the windscreen wiper drive linkage (101).

7. The link rod (105) as claimed in any one of preceding claims, wherein the sidewalls (220a, 220b) of the elongated portion (215) extend around the contour of the connecting bases (230a, 230b) of the first attachment portion (205) and the second attachment portion (210).

8. The link rod (105) as claimed in any one of previous claims, wherein the longitudinal sidewalls (220a, 220b) are joined to the longitudinal intermediate wall (225b) in a curved manner.

9. The link rod (105) as claimed in any one of previous claims, wherein the first attachment portion (205), the second attachment portion (210), and the elongated portion (215) are formed as a single component.

10. A windscreen wiper drive linkage (101) comprising the link rod according to claims 1-9, wherein
a first longitudinal end (209a, 120a, 120b) of the link rod (105) is coupled to a first pivot shaft (140a) for driving a first wiper arm by means of a first driving crank (115a) fixedly coupled at one of its end with the first wiper pivot shaft (140a); and
a second longitudinal end (209b, 130a, 130b) of the link rod (105) is coupled to a second pivot shaft (140b) for driving a second wiper arm by means of a second driving crank (115b) fixedly coupled at one of its end with the second wiper pivot shaft (140b).
